# EUROPÄISCHE PATENTANMELDUNG

(11) **EP 1 701 474 A1**
(43) Veröffentlichungstag der Anmeldung: **13.09.2006**
(21) Anmeldenummer: 05005117.6
(22) Anmeldetag: 09.03.2005
(51) Int. Cl.: H04L 12/26, H04L 29/06

(54) **Überwachungssystem für ein Kommunikationsnetz zur eindeutigen Erkennung der Zerstörung eines Netzwerkelementes**

(71) Anmelder: SIEMENS AKTIENGESELLSCHAFT, 80333 München (DE)
(72) Erfinder: Laghi, Giovanni, 86415 Mering (DE); Prade, Johannes, Dr., 84130 Dingolfing (DE)
(74) Vertreter: Berg, Peter

(57) **Zusammenfassung**

Die Erfindung betrifft ein Überwachungssystem zur eindeutigen Erkennung der Zerstörung eines Netzelementes (MGC) in einem Kommunikationsnetz (IPN), welches ein Netzmanagementsystem (NMS), Netzelementen (MGC) und zu jedem Netzwerkelement (MGC) ein Sicherungsnetzelement (MGCr) umfasst, wobei jedem Netzelement (MGC) Sende- (SE1, SE2) sowie Prüf-Einheiten (PE1, PE2) zugeordnet werden. Von den Sende-Einheiten (SE1, SE2) des Netzelementes (MGC) werden in bestimmten Zeitintervallen Nachrichten an die Prüf-Einheiten (Pe1, PE2) im Kommunikationsnetz (IPN) gesendet. Beim Ausbleiben dieser Nachrichten in einem Zeitintervall wird von den Prüf-Einheiten (PE1, PE2) im Kommunikationsnetz (IPN) erkannt, dass das Netzelement (MGC) zerstört wurde, und eine Fehlermeldung an das Netzmanagementsystem (NMS) gesendet. Vom Netzmanagementsystem (NMS) wird daraufhin der Ersatz des jeweiligen Netzelementes (MGC) durch das jeweilige Sicherungsnetzelement (MGCr) angestoßen.

Die mit der Erfindung erzielten Vorteile bestehen insbesondere darin, dass die Zerstörung eines Netzelementes (MGC) zweifelsfrei festgestellt werden kann. Durch die Fehlermeldung, die vom erfindungsgemäßen Überwachungssystem wird an das Netzmanagementsystem (NMS) gesendet wird, wird die Zerstörung eines Netzelementes (MGC) eindeutige von anderen bei Netzelementen (MGC) auftretenden Störungen unterschieden werden. Daher wird vom Netzmanagementsystem (NMS) nur dann ein Umschalten auf das Sicherungsnetzelement (MGCr) angestoßen und damit Instabilitäten durch häufiges Umschalten verhindert.

## Beschreibung

Die Erfindung betrifft ein Überwachungssystem zur eindeutigen Erkennung der Zerstörung eines Netzelementes in einem Kommunikationsnetz, welches ein Netzmanagementsystem, Netzelemente und zu jedem Netzelement ein Sicherungsnetzelement umfasst.

Ein Kommunikationsnetz ist definitionsgemäß der Oberbegriff für alle Ressourcen, durch welche voneinander entfernte Netzzugangspunkte verbunden werden und von welchen diesen Dienste mit Dienstmerkmalen zu Kommunikationszwecken zur Verfügung gestellt werden.

Kommunikationsnetze zerfallen in der Regel in ein Anwendungssystem und ein Transportnetz. In seiner Ausdehnung kann das Transportnetz örtlich sehr begrenzt sein wie beispielsweise bei einem Local Area Network oder es kann eine sehr große Ausdehnung annehmen, wie zum Beispiel bei Wide Area Networks oder Telekommunikationnetzen. Das Transportnetz ist jener Teil des Kommunikationsnetzes, welcher eine sichere, fehlerfreie und qualitativ hochwertige Datenübertragung zur Verfügung stellt. Das Anwendungssystem setzt diese Datenübertragung voraus und interpretiert die transportierten Daten, um sie dem Nutzer des Kommunikationsnetzes entsprechend zugänglich und nutzbar zu machen.

Das Kommunikationsnetz, und dabei besonders das Transportnetz, ist aus Netzelementen wie zum Beispiel Vermittlungsstellen, Softswitche, Router oder Gateways aufgebaut. Diese Netzelemente sind mittels physikalischer Verbindungen, welche die Kommunikationswege für die Übertragung von Daten bilden, miteinander verbunden.

Da für Kommunikationsnetze meist eine möglichst hohe Verfügbarkeit gefordert wird, werden die Netzelemente oft redundant ausgeführt. Das bedeutet, dass im Kommunikationsnetz über die angenommene Verkehrslast hinaus zusätzliche Netzelemente vorgesehen sind, die im Fehlerfall genutzt werden. Bei Redundanz gibt es daher zu (fast) jedem im Kommunikationsnetz aktiv eingesetzten Netzelement ein so genanntes Sicherungsnetzelement. Sind das aktive Netzelement und das Sicherungsnetzelement örtlich von einander getrennt - wie das oft bei Kommunikationsnetzen mit sehr großer Ausdehnung der Fall ist, so wird das als geografische Redundanz bezeichnet.

Das Sicherungsnetzelement ist mit dem aktiven Netzelement in Aufbau und Konfiguration ident. Außerdem wird sichergestellt, dass das Sicherungsnetzelement und das aktive Netzelement dieselbe Datenbasis besitzen, damit in einem Fehlerfall wie zum Beispiel bei der Störung, dem Neustart, dem Ausfall oder der Zerstörung eines aktiven Netzelementes stattdessen das zugehörige Sicherungsnetzelement eingesetzt werden kann.

Im Kommunikationsnetz wird ein meist zentrales Netzmanagementsystem für die Verwaltung der Netzelemente eingesetzt, von dem auch das Erkennen und Diagnostizieren von Fehlern, das so genannte Fehlermanagement, im Kommunikationsnetz übernommen wird. Unter Fehlermanagement werden alle Aktivitäten zusammengefasst, die sich mit Fehlererkennung und Fehlerbehebung in Kommunikationsnetzen beschäftigen, sodass eine möglichst hohe Netzverfügbarkeit garantiert werden kann. Dabei werden die Aktivitäten der Netzelemente anhand von Ereignis- oder Fehlermeldungen durch das Netzmanagementsystem überwacht. Tritt bei einem Netzelement ein Fehler auf, so wird vom Netzmanagementsystem eine entsprechende Fehlerbehandlung wie beispielsweise ein Starten von Fehlerbehebungsprogrammen, ein Neustart der Software des Netzelements oder manuelle Eingriffe durch das Administrationspersonal angestoßen. Eine weitere Möglichkeit der Behebung von Störungen bei Netzelementen in einem Kommunikationsnetz stellt aber auch das Umschalten vom aktiven Netzelement auf das zugehörige Sicherungsnetzelement dar.

Beim Fehlermanagement in Kommunikationsnetzen wird meist die Fehlerbehandlungsmethode vom Netzmanagementsystem durch eine Kategorie der Ereignis- oder Fehlermeldung bestimmt. Diese Kategorie ergibt sich aus der Art des Fehlers, der beim überwachten Netzelement aufgetreten ist, wobei bei der Störung, dem Ausfall und der Zerstörung des Netzelementes eine Ereignis- oder Fehlermeldung mit der höchsten Priorität bzw. Dringlichkeitsstufe erzeugt wird. Eine solche Fehlermeldung hat dann zur Folge, dass im Kommunikationsnetz auf das Sicherungsnetzelement umgeschaltet wird. Allerdings tritt durch ein häufiges Hin- und Herschalten zwischen Netzelement und zugehörigem Sicherungsnetzelement das Problem auf, dass Instabilitäten im Netz erzeugt werden. Daher sollte ein Umschalten nur im wirklichen Bedarfsfall wie bei der tatsächlichen Zerstörung des aktiven Netzelements erfolgen.

Bei den aus dem Stand der Technik bekannten bzw. nahe liegenden Lösungsansätzen für Netzmanagement- und Überwachungssysteme wird allerdings nicht unterschieden, ob das Netzelement tatsächlich zum Beispiel durch Überflutung, Feuer oder Ähnliches zerstört wurde oder ob das Netzelement nur durch ein temporäres, kurzzeitiges und behebbares Ereignis wie beispielsweise einen Neustart der Systemsoftware, eine Störung durch einen Softwarefehler oder eine defekte Hardware-Einheit ausgefallen ist. Um zweifelsfrei festzustellen, ob das Netzelement zerstört ist, muss daher der Standort des Netzelementes aufgesucht, beziehungsweise im Katastrophenfall eine entsprechende Nachrichtensendung ausgewertet werden.

Der vorliegenden Erfindung liegt daher die Aufgabe zugrunde, ein Überwachungssystem in einem Kommunikationssystem anzugeben, mit welchem die Zerstörung eines Netzelementes automatisch, eindeutig und zweifelsfrei festgestellt werden kann, sodass nur bei der tatsächlichen Zerstörung des Netzelementes auf das Sicherungsnetzelement umgeschaltet wird.

Erfindungsgemäß erfolgt die Lösung dieser Aufgabe durch ein Überwachungssystem der eingangs erwähnten Art, bei dem jedem Netzelement Sende-Einheiten sowie Prüf-Einheiten zur Überwachung zugeordnet werden, wobei von den Sende-Einheiten des Netzelementes in bestimmten Zeitintervallen Nachrichten an die Prüf-Einheiten im Kommunikationsnetz gesendet werden, bei Ausbleiben dieser Nachrichten in einem Zeitintervall die Zerstörung des Netzelementes von den Prüf-Einheiten im Kommunikationsnetz erkannt und eine Fehlermeldung an das Netzmanagementsystem gesendet wird und daraufhin vom Netzmanagementsystem der Ersatz des jeweiligen Netzelementes durch das jeweilige Sicherungsnetzelement angestoßen wird.

Die mit der Erfindung erzielten Vorteile bestehen insbesondere darin, dass die Zerstörung eines Netzelementes zweifelsfrei festgestellt werden kann. Durch die Fehlermeldung, die vom erfindungsgemäßen Überwachungssystem an das Netzmanagementsystem gesendet wird, kann die Zerstörung eines Netzelementes eindeutig von anderen bei Netzelementen auftretenden Störungen unterschieden werden. Daher wird vom Netzmanagementsystem nur dann ein Umschalten auf das Sicherungsnetzelement angestoßen und damit Instabilitäten durch häufiges Umschalten verhindert.

Es ist günstig, wenn das Zeitintervall, in dem von den Sende-Einheiten des Netzelementes Nachrichten versendet werden, konfigurierbar gestaltet ist. Dadurch kann festgelegt werden, in welchem Zeitraster ein Netzelement überwacht wird. So können beispielsweise Netzelemente an Standorten, wo die Gefahr der Zerstörung höher ist, durch häufigeres Versenden von Nachrichten durch die Sende-Einheiten besser überwacht werden. Andererseits ermöglicht die Konfigurierbarkeit des Zeitintervalls, dass die Belastung des Kommunikationsnetzes durch die Nachrichten der Sende-Einheiten gering bleibt.

Einen Vorteil stellt auch dar, wenn die Zieladresse der Prüf-Einheit, an welche die Nachrichten von den Sende-Einheiten des Netzelementes gesendet werden, vorgebbar oder dynamisch ermittelt wird. Durch die eine Möglichkeit der vorgegebenen Zieladresse können im Kommunikationsnetz die Prüf-Einheiten fix festgelegt werden, zu denen bestimmte Sende-Einheiten die Nachrichten senden und damit welche Prüf-Einheiten ein bestimmtes Netzelement überwachen. Durch die andere Möglichkeit der dynamisch ermittelten Zieladressen können auf einfache Weise Prüf-Einheiten im Kommunikationsnetz hinzugefügt oder entfernt werden, ohne dass die Überwachung der Netzelemente dadurch verringert wird.

Eine zweckmäßige Weiterbildung der Erfindung sieht vor, dass jedem Netzelement mindestens zwei Sende-Einheiten zugeordnet sind. Dadurch wird gewährleistet, dass von den Prüf-Einheiten beim Ausfall oder bei der Störung nur einer Sende-Einheit eines Netzelementes nicht die Zerstörung des Netzelementes an das Netzmanagementsystem gemeldet wird. Erst wenn die Prüf-Einheiten von den mindestens zwei Sende-Einheiten eines Netzelementes keine Nachricht mehr bekommen, wird eine Fehlermeldung an das Netzmanagementsystem gesendet und auf das Sicherungsnetzelement umgeschaltet. Dadurch wird vorteilhafterweise ein unnötiges Umschalten auf das Sicherungsnetzelement bei der Störung einer Sende-Einheit verhindert.

Vorteilhaft ist es auch, wenn die Sende-Einheiten des Netzelementes am Standort des Netzelementes untergebracht oder in das Netzelement integriert sind. Durch die räumliche Nähe der Sende-Einheit zum überwachten Netzelement oder die Integration der Sende-Einheit in das überwachte Netzelement ist sicher gestellt, dass die Sende-Einheiten durch die selben äußeren Einflüsse wie zum Beispiel Feuer, Überflutung oder ähnliches zerstört werden wie das überwachtet Netzelement.

In weiterer Ausgestaltung der Erfindung beinhalten die Sende-Einheiten auch Funktionalitäten der Prüf-Einheiten und die Prüf-Einheiten auch Funktionalitäten der Sende-Einheiten. Durch diese Ausgestaltung wird eine weitere Erhöhung der Ausfallssicherheit des erfindungsgemäßen Überwachungssystems erzielt. So kann beispielsweise von Netzmanagementsystem die Funktionsfähigkeit der Prüf-Einheiten getestet werden, indem von der Prüf-Funktionalität der Sende-Einheiten eine Prüf-Einheit gemeldet wird, von welcher die Sende-Funktionalität nicht ausgeführt wird.

Es empfiehlt sich auch, dass die Kommunikationswege im Kommunikationsnetz zwischen Sende- und Prüf-Einheiten redundant ausgeführt sind, damit wird verhindert, dass aufgrund einer Störung auf einem Kommunikationsweg die Zerstörung eines Netzelementes an das Netzwerkmanagementsystem gemeldet wird.

Günstig ist es, wenn die Kommunikationswege im Kommunikationsnetz zwischen Sende- und Prüf-Einheiten von den Kommunikationswegen von Teilnehmerinformationen entkoppelt sind. Dadurch wird verhindert, dass eine Zerstörung eines Netzelementes an das Netzwerkmanagementsystem gemeldet wird, wenn Kommunikationswege für Teilnehmerinformationen durch beispielsweise Denial-of-Service-Attacken, durch die ein Netzelement an der Ausführung oder dem Anbieten von Diensten gehindert wird, unterbrochen werden.

Die Erfindung wird nachfolgend in beispielhafter Weise unter Bezugnahme auf die beigefügte Figur erläutert.

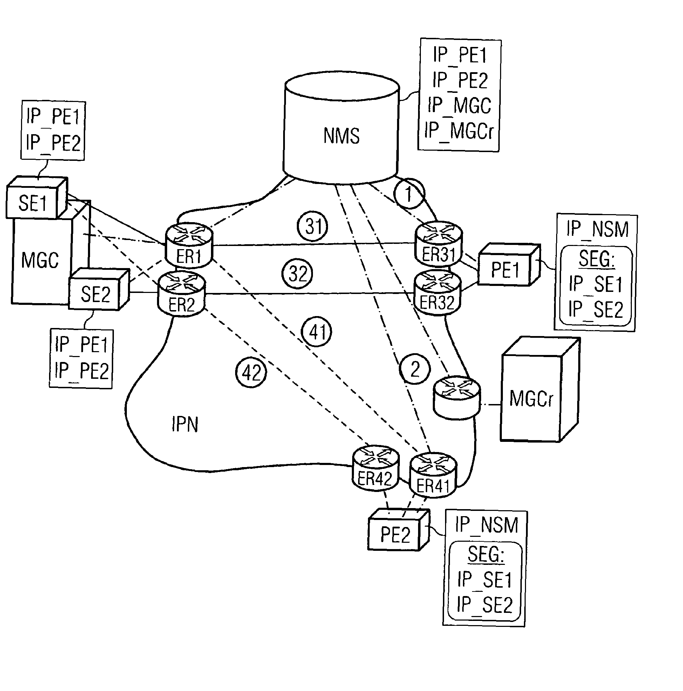

- Fig. 1: Überwachung eines Netzelementes "Media Gateway Controller" durch das erfindungsgemäße Überwachungssystem in einem zur Kommunikation verwendeten IP-Netzwerk

Figur 1 zeigt als Kommunikationsnetz IPN ein zur Kommunikation eingesetztes IP-Netzwerk, das ein Netzelement "Media Gateway Controller" MGC, ein zugehöriges Sicherungsnetzelement MGCr, ein Netzmanagementsystem NMS sowie Sende-Einheiten SE1 und SE2 und Prüf-Einheiten PE1 und PE2 umfasst. Eine Verbindung des Netzelement MGC zum Kommunikationsnetz IPN erfolgt über redundant ausgeführte Edge Router ER1 und ER2.

Am Standort des Netzelement MGC sind die beiden Sende-Einheiten SE1 und SE2 als physikalisch und logisch unabhängig vom Netzelement MGC angebracht. Für die Verbindung zum Kommunikationsnetz IPN werden von den Sende-Einheiten SE1 und SE2 die Edge Route ER1 und ER2 genutzt, wobei von der Sende-Einheit SE1 über den Edge Router ER1 an das Kommunikationsnetz IPN angebunden ist und von der Sende-Einheit SE2 der Edge Router ER2 genutzt wird.

Die Prüf-Einheiten PE1 und PE2 sind an zwei verschiedenen Standorten im Kommunikationsnetz IPN installiert und ebenfalls mit Edge Routern ER31, ER32, ER41 und ER42 an das Kommunikationsnetz IPN angebunden. Die beiden Prüf-Einheiten PE1 und PE2 kommunizieren mit dem Netzmanagementsystem NMS über Kommunikationswege 1, 2 innerhalb des Kommunikationsnetzes IPN. Die Kommunikation mit den beiden Sende-Einheiten SE1 und SE2 erfolgt über getrennte Kommunikationswege 31, 32, 41, 42, wobei von der Prüf-Einheit PE1 die Edge Router ER31 und ER32 und die Kommunikationswege 31 und 32 genutzt werden. Für die Prüfeinheit PE2 werden zur Kommunikation mit den Sende-Einheiten SE1 und SE2 die Edge Router ER41 und ER42 und die Kommunikationswege 41 und 42 verwendet.

In den Sende-Einheiten SE1 und SE2 sind die Zieladressen IP_PE1 und IP_PE2 sowie das Zeitintervall für das Senden einer Nachricht administriert.

In den Prüf-Einheiten PE1 und PE2 sind die Adressen IP SE1 und IP_SE2 der Sende-Einheiten SE1 und SE2 und die Adresse IP_NMS des Netzmanagementsystem NMS hinterlegt. Außerdem ist auf den Prüf-Einheiten eine logische Gruppe SEG eingerichtet, die die Adressen IP_SE1 und IP_SE2 der Sende-Einheiten SE1 und SE2 des Netzelementes MGC umfasst.

Im Netzmanagementsystem sind die Adressen IP_PE1 und IP_PE2 der Prüf-Einheiten PE1 und PE2 sowie die Adresse IP_MGC des Netzelementes MGC und die Adresse IP _MGCr des Sicherungsnetzelement MGCr administriert.

Zur Überwachung des Netzelement MGC sendet jede der beiden Sende-Einheiten SE1 und SE2 im administrierten Zeitintervall parallel eine Nachricht an die Zieladressen IP_PE1 und IP_PE2 der beiden Prüf-Einheiten PE1 und PE2. Von jeder der beiden Prüf-Einheiten wird sowohl eine Nachricht von der Sende-Einheit SE1 als auch von der Sende-Einheit SE2 empfangen. Von jeder Prüf-Einheit PE1, PE2 wird nun selbständig geprüft, ob innerhalb des administrierten Zeitintervalls eine Nachricht von allen Sende-Einheiten SE1, SE2 des Netzelementes MGC, die als logische Gruppe SEG zusammengefasst sind, eintrifft.

Wird von keiner Sende-Einheit SE1, SE2 der logischen Gruppe SEG eine Nachricht empfangen, so wird von den Prüf-Einheiten PE1 und PE2 erkannt, dass das Netzelement MGC zerstört worden ist. In diesem Fall werden von den Prüf-Einheiten PE1 und PE2 voneinander unabhängig Fehlermeldungen an das Netzmanagementsystem NMS gesendet. Werden solche Fehlermeldungen der Prüf-Einheiten PE1 und PE2 von Netzmanagementsystem NMS empfangen, so wird die Zerstörung des Netzelement MGC erkannt und die Umschaltung auf das geografisch redundante Sicherungselement MGCr vom Netzmanagementsystem NMS angestoßen.

Die Erreichbarkeit der Prüf-Einheiten PE1 und PE2 wird vom Netzmanagementsystem NMS laufend geprüft, indem Nachrichten zu allen administrierten Prüf-Einheiten PE1 und PE2 gesendet werden. Wird von einer der Prüf-Einheiten PE1, PE2 nicht geantwortet, so wird vom Netzmanagementsystem von dieser Prüf-Einheit PE1, PE2 auch keine Fehlermeldung erwartet.

Das in Figur 1 beispielhaft für ein Netzelement "Media Gateway Controller" MGC dargestellte Überwachungssystem kann gleichermaßen für jedes andere Netzelement in einem beliebigen Kommunikationsnetz wie beispielsweise IP-Netze, Telekommunikationsnetze für Festnetz oder aus dem Mobilfunkbereich, etc. eingesetzt werden. Vom Prinzip her gilt dabei die gleiche Vorgehensweise.

## Patentansprüche

1. Überwachungssystem zur eindeutigen Erkennung der Zerstörung eines Netzelementes (MGC) in einem Kommunikationsnetz (IPN), welches ein Netzmanagementsystem (NMS), Netzelemente (MGC) und zu jedem Netzelement (MGC) ein Sicherungsnetzelement (MGCr) umfasst, **dadurch gekennzeichnet, dass**
- jedem Netzelement (MGC) Sende-Einheiten (SE1, SE2) sowie Prüf-Einheiten (PE1, PE2) zur Überwachung zugeordnet werden,
- dass von den Sende-Einheiten (SE1, SE2) des Netzelementes (MGC) in bestimmten Zeitintervallen Nachrichten an die Prüf-Einheiten (PE1, PE2) im Kommunikationsnetz (IPN) gesendet werden,
- dass bei Ausbleiben dieser Nachrichten in einem Zeitintervall die Zerstörung des Netzelementes (MGC) von den Prüf-Einheiten (PE1, PE2) im Kommunikationsnetz (IPN) erkannt und eine Fehlermeldung an das Netzmanagementsystem (NMS) gesendet wird
- und dass daraufhin vom Netzmanagementsystem (NMS) der Ersatz des jeweiligen Netzelementes (MGC) durch das jeweilige Sicherungsnetzelement (MGCr) angestoßen wird.

2. Überwachungssystem nach Anspruch 1 **dadurch gekennzeichnet, dass** das Zeitintervall, in dem von den Sende-Einheiten (SE1, SE2) des Netzelementes (MGC) Nachrichten versendet werden, konfigurierbar gestaltet ist.

3. Überwachungssystem nach den Ansprüchen 1 bis 2 **dadurch gekennzeichnet, dass** die Zieladresse (IP_PE1, IP_PE2) der Prüf-Einheit (PE1, PE2), an welche die Nachrichten von den Sende-Einheiten (SE1, SE2) des Netzelementes (MGC) gesendet werden, vorgebbar oder dynamisch ermittelt wird.

4. Überwachungssystem nach den Ansprüchen 1 bis 3 **dadurch gekennzeichnet, dass** jedem Netzelement (MGC) mindestens zwei Sende-Einheiten (SE1, SE2) zugeordnet sind.

5. Überwachungssystem nach den Ansprüchen 1 bis 4 **dadurch gekennzeichnet, dass** die Sende-Einheiten (SE1, SE2) des Netzelementes (MGC) am Standort des Netzelementes (MGC) untergebracht oder in das Netzelement (MGC) integriert sind.

6. Überwachungssystem nach den Ansprüchen 1 bis 5 **dadurch gekennzeichnet, dass** von den Sende-Einheiten (SE1, SE2) auch Funktionalitäten der Prüf-Einheiten (PE1, PE2) und von den Prüf-Einheiten (PE1, PE2) auch Funktionalitäten der Sende-Einheiten (SE1, SE2) beinhaltet werden.

7. Überwachungssystem nach den Ansprüchen 1 bis 6 **dadurch gekennzeichnet, dass** die Kommunikationswege (31, 31, 41, 42) im Kommunikationsnetz (IPN) zwischen Sende-(SE1, SE2) und Prüf-Einheiten (PE1, PE2) redundant ausgeführt sind.

8. Überwachungssystem nach den Ansprüchen 1 bis 7 **dadurch gekennzeichnet, dass** die Kommunikationswege (31, 32, 41, 42) im Kommunikationsnetz (IPN) zwischen Sende-(SE1, SE2) und Prüf-Einheiten (PE1, PE2) von den Kommunikationswegen von Teilnehmerinformationen entkoppelt sind.
